# EUROPÄISCHE PATENTSCHRIFT

(11) **EP 0 990 873 B1**
(45) Veröffentlichungstag und Bekanntmachung des Hinweises auf die Patenterteilung: **21.12.2005**
(21) Anmeldenummer: 99118440.9
(22) Anmeldetag: 17.09.1999
(51) Int. Cl.: G01D 7/00, G01P 1/08

(54) **Zeigerinstrument**
Pointer instrument
Aiguille de cadran indicateur

(30) Priorität: 20.10.1998 DE 19848219; 28.09.1998 DE 19844187
(43) Veröffentlichungstag der Anmeldung: 05.04.2000
(73) Patentinhaber: SIEMENS AKTIENGESELLSCHAFT, 80333 München (DE)
(72) Erfinder: Rothermel, Guido, 64832 Babenhausen (DE)

(56) Entgegenhaltungen:
- EP-A- 0 429 418
- DE-U- 8 606 810
- FR-A- 2 708 732
- US-A- 4 464 794

## Beschreibung

Die Erfindung betrifft ein Zeigerinstrument, insbesondere für ein Kraftfahrzeug, mit einem Zeiger, einem Zeigerantrieb zur Auslenkung des Zeigers und mit einem Zifferblatt, wobei mit dem Zeiger an dem Zifferblatt Meßwerte analog einstellbar sind, wobei der Zeiger um eine ortsfeste Achse schwenkbar ist, welche an einem einem Betrachter zugeneigten Abschnitt eine Anzeige trägt.

Zeigerinstrumente der vorstehenden Art werden beispielsweise als Tachometer oder Drehzahlmesser in heutigen Kraftfahrzeugen eingesetzt. Zur besseren Ablesbarkeit ist es dabei wünschenswert, wenn das Zeigerinstrument einen relativ großen Durchmesser aufweist. Nachteilig wirkt sich dabei aus, dass der von einer Skala eingeschlossene, mittlere, innere Bereich von einer Zeigerfahne überstrichen wird und daher für weitere Anzeigen nur eingeschränkt zur Verfügung steht. Dabei muss sichergestellt werden, dass die Anzeige unabhängig von der Winkelstel-lung der Zeigerfahne jederzeit ablesbar ist. Weiterhin wirkt sich nachteilig aus, dass eine die Zeigerfahne auslenkende Zeigerwelle den zentralen Bereich des Zeigerinstrumentes durchbricht. Hierdurch muss beim Einsatz großflächiger Anzeigen, insbesondere LCD-Anzeigen, eine Durchbrechung für die Zeigerwelle vorgesehen werden, was mit erheblichen fertigungstechnischen Problemen verbunden ist.

Es sind auch Ausführungsformen von Zeigerinstrumenten bekannt, bei denen eine zentrale Durchbrechung für die Zeigerwelle dadurch vermieden wird, dass die Zeigerfahne doppelt gekröpft ausgeführt und so in einem mittleren Bereich zunächst hinter der Anzeige entlang geführt ist und lediglich im Randbereich des Zeigerinstrumentes für den Betrachter sichtbar ist. Eine solche Ausführungsform bedingt einen relativ langen Zeiger, der durch Schwingungen, wie sie beispielsweise in einem Kraftfahrzeug unvermeidlich sind, ebenfalls ins Schwingen gerät. Dadurch wird das Ablesen des Zeigerinstrumentes erschwert und ein unerwünschter, minderwertiger Eindruck vermittelt. Ein weiterer Nachteil besteht darin, daß es bei einer Berührung zwischen dem schwingenden Zeiger und der Anzeige oder dem Zifferblatt zu einer Beeinträchtigung der Eichung des Zeigerinstruments kommen kann.

Aus dem deutschen Gebrauchsmuster G 8606810.5 ist bereits ein Anzeigeinstrument bekannt, welches mehrere Anzeigefunktionen aufweist und auch einen Zentralbereich des Instrumentes zur Anzeige nutzt. Die intuitive Ablesbarkeit stellt jedoch hohe Anforderungen an den Benutzer.

Der Erfindung liegt das Problem zugrunde, ein Zeigerinstrument der eingangs genannten Art so zu gestalten, dass Schwingungen des Zeigers vermieden werden können und zugleich der Zentralbereich des Instruments für weitere Anzeigen nutzbar ist. Dabei soll keine Einschränkung der Ablesbarkeit gegeben sein, insbesondere nicht durch einen über der Anzeige verschwenkten Zeiger.

Dieses Problem wird erfindungsgemäß dadurch gelöst, dass der Zeiger um eine ortsfeste Achse schwenkbar ist, welche an einem einem Betrachter zugeneigten Abschnitt eine Anzeige trägt. Hierdurch kann der zentrale Bereich, insbesondere die Stirnfläche der unbeweglichen Achse für eine Anzeige oder ein Schaltelement genutzt und zugleich die Länge des Zeigers reduziert werden. Dabei ist die bewegte Masse verringert, so dass der Zeigerantrieb entlastet und zugleich eine hohe Stellgeschwindigkeit erreicht wird. Der Durchmesser der Achse kann dabei an die Größe der gewünschten Anzeige optimal angepasst werden, wobei das Zeigerinstrument im Gegensatz zu herkömmlichen Zeigerinstrumenten, die eine die Zeigerfahne auslenkende Zeigerwelle aufweisen, formstabiler und damit unempfindlicher gegenüber äußeren Erschütterungen oder Vibrationen ist.

Eine besonders vorteilhafte Weiterbildung der Erfindung ist dabei dadurch gegeben, dass die Anzeige eine Flüssigkristallanzeige (LCD) ist. Durch die geringe Bauhöhe einer LC-Anzeige kann ein derart ausgeführtes Zeigerinstrument vergleichsweise flach ausgeführt sein kann. Dadurch entsteht eine kompakte und insbesondere durch die dadurch mögliche geringe Höhe der Achse äußerst steife und damit unempfindliche Anordnung. Mit Hilfe der LC-Anzeige lassen sich zudem eine Vielzahl von Informationen mühelos darstellen.

Der Zeiger kann eine um die Achse schwenkbare Zeigerfahne aufweisen. Besonders vorteilhaft ist hingegen eine Weiterbildung der Erfindung, bei der der Zeiger einen um die Achse schwenkbaren, rotationssymmetrischen Tragkörper hat. Dieser Tragkörper kann für einen Betrachter sichtbar in einem kreisringförmigen Spalt zwischen der Achse und dem Zifferblatt drehbar angeordnet sein und eine an sich bekannte Zeigerfahne oder eine auf die Oberfläche des Tragkörpers aufgebrachte Markierung aufweisen. Zugleich ist der Tragkörper durch die rotationssymmetrische Ausführungsform problemlos unmittelbar mittels des Zeigerantriebes auslenkbar. Hierzu kann der Zeigerantrieb beispielsweise ein Reibrad oder Zahnrad aufweisen, welches in einen entsprechend gestalteten Abschnitt des Tragkörpers eingreift.

Eine besonders günstige Ausführungsform der Erfindung ist auch dann gegeben, wenn die Achse in einem für den Betrachter nicht sichtbaren Abschnitt einen geringeren Durchmesser aufweist als in einem für den Betrachter sichtbaren Abschnitt. Hierdurch kann die zwischen der Achse und dem Zeiger erforderliche Lagerstelle von dem die Anzeige tragenden Abschnitt der Achse problemlos überdeckt werden und so für den Betrachter unsichtbar außerhalb seines Blickfeldes angeordnet sein. Zugleich ermöglicht diese Ausführung durch den gegenüber dem sichtbaren Bereich der Achse verjüngten, rückwärtigen Abschnitt eine platzsparende Anordnung des Zeigerantriebes oder weiterer Bauelemente.

Eine besonders zweckmäßige Ausführungsform der Erfindung ist dadurch gegeben, dass der Tragkörper an seiner einem Betrachter abgewandten Seite eine Lichteinkoppelfläche hat. Hierdurch lässt sich eine einfache und problemlose Beleuchtung des Zeigers und einer möglichen damit verbundenen Zeigerfahne erreichen. Insbesondere durch eine vergleichsweise großflächige Gestaltung der Lichteinkoppelfläche können dabei auch energiesparende und zuverlässige Leuchtdioden (LED) eingesetzt werden.

Der Zeiger kann in einer gegenüber der Anzeige hervortretenden Ebene schwenkbar angeordnet sein. Eine besonders übersichtliche Ausführungsform der Erfindung ist hingegen dadurch gegeben, dass der Zeiger und das Zifferblatt in einer gemeinsamen Ebene angeordnet sind. Hierdurch können Ablesefehler durch unterschiedliche Betrachtungswinkel verhindert werden. Zugleich lässt sich dabei eine kompakte und flache Bauform erreichen, wobei eine mögliche Abdeckscheibe des Zeigeinstrumentes unmittelbar vor dem Zifferblatt angeordnet werden kann und dadurch Reflexionen ausgeschlossen sind. Dabei kann zusätzlich auch die Anzeige in der gemeinsamen Ebene angeordnet sein. Der Zeiger ist hierbei beispielsweise kreisringförmig ausgeführt und in eine entsprechende Ausnehmung eingesetzt, so dass der Blick auf darunterliegende Bauteile des Zeigerinstrumentes versperrt ist.

Eine besonders günstige Weiterbildung der Erfindung ist auch dann gegeben, wenn das Zeigerinstrument mittels einer Elektrolumineszenz (EL)-Folie beleuchtbar ausgeführt ist. Hierdurch wird eine gleichmäßige und großflächige Beleuchtung des beispielsweise ringförmigen Tragkörpers des Zeigers ermöglicht. Dabei kann sowohl lediglich eine Zeigerfahne oder eine Markierung als auch der gesamte Tragkörper beleuchtbar sein. Hierzu kann die EL-Folie in die Lichteinkoppelfläche einstrahlen oder unmittelbar an dem Zeiger angeordnet und mit diesem zusammen schwenkbar sein.

Eine Weiterbildung der Erfindung ist dadurch besonders vorteilhaft, dass der Zeiger von dem Zeigerantrieb mittels eines Riemenantriebes auslenkbar ist. Dadurch kann eine Übertragung von Vibrationen oder Erschütterungen von dem Zeigerantrieb auf den Zeiger erheblich verringert werden. Das Zeigerinstrument kann daher auch unter schwierigen Betriebsbedingungen problemlos abgelesen werden.

Eine andere Ausführungsform der Erfindung ist dadurch besonders zweckmäßig, dass der Zeigerantrieb seitlich neben dem Zeiger angeordnet ist. Dadurch lässt sich eine geringe Bauhöhe mit lediglich geringem Platzbedarf realisieren. Je nach Größe des Tragkörpers sind auch Abwandlungen denkbar, bei denen der Zeigerantrieb an einer Innenseite eines als Hohlkörper ausgeführten Zeigers eingreift. Hierbei kann der Antrieb auch zugleich in die ortsfeste Achse integriert sein.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine seitliche, teilweise geschnittene Darstellung eines erfindungsgemäßen Zeigerinstrumentes,
- Fig. 2: eine Draufsicht auf das Zeigerinstrument.

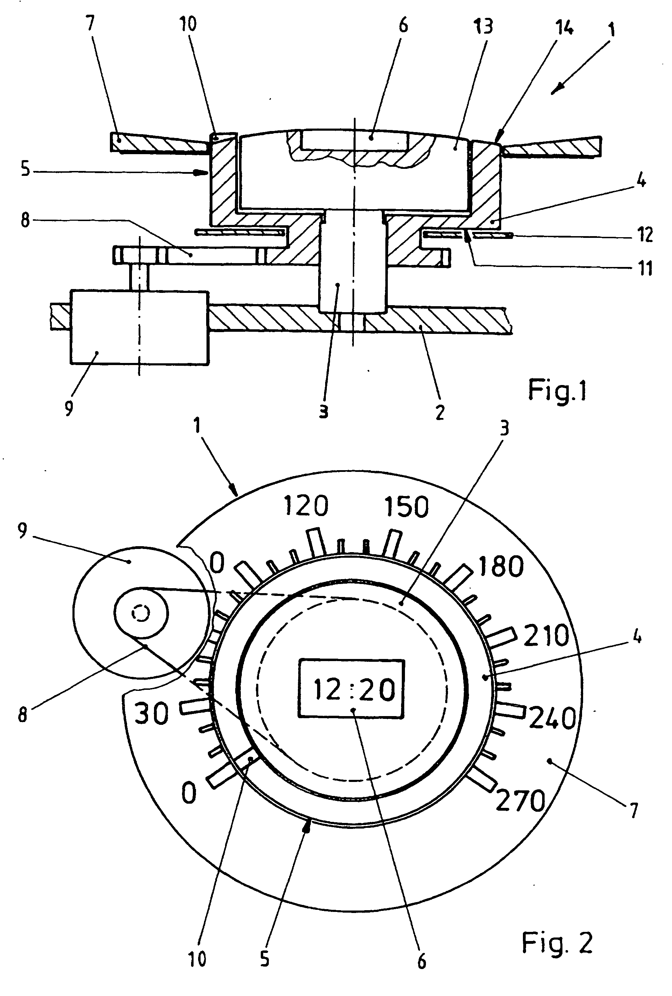

Figur 1 zeigt eine seitliche Schnittdarstellung eines eine Geschwindigkeitsanzeige aufweisenden Zeigerinstrumentes 1. Das Zeigerinstrument 1 hat eine zentral angeordnete und mit einer z. B. als Leiterplatte eines Kombinationsinstrumentes eines Kraftfahrzeuges ausgebildeten rückwärtigen Trägerplatte 2 ortsfest verbundene Achse 3. Um diese Achse 3 ist ein mit einem Tragkörper 4 versehener Zeiger 5 drehbar angeordnet. Der Zeiger 5 ist im wesentlichen topfförmig ausgeführt und umschließt an seinem einem Betrachter zugeneigten Ende eine Erweiterung 13 der Achse 3, welche Erweiterung 13 eine zentrale, als Flüssigkristallanzeige ausgeführte Anzeige 6 trägt. Außenseitig angrenzend an den Zeiger 5 ist in einer im wesentlichen gemeinsamen Ebene mit einer Sichtfläche 14 des Zeigers 5 ein Zifferblatt 7 angeordnet. Der Zeiger 5 ist mittels eines Riemenantriebes 8 mit einem Zeigerantrieb 9 verbunden, welcher eine vibrationsfreie Auslenkung des Zeigers 5 mit einer beleuchtbaren Markierung 10 ermöglicht. Der Tragkörper 4 hat weiterhin eine senkrecht zu der Achse 3 angeordnete Lichteinkoppelfläche 11, der gegenüber eine als Elektrolumineszenz-Folie 12 ausgeführte Lichtquelle mit geringem Abstand angeordnet ist. Das in den als Lichtleiter ausgeführten Tragkörper 4 einstrahlende Licht gelangt zu der Markierung 10 und ermöglicht so eine gute Ablesbarkeit des angezeigten Wertes. Durch die topfförmige Gestaltung des Tragkörpers 4 kann die Lichteinkoppelfläche 11 an dessen Unterseite vergleichsweise großflächig ausgeführt sein, so dass eine gleichmäßige Beleuchtung erfolgen kann. Andere Ausführungsformen, bei denen der Tragkörper 4 im wesentlichen rohrförmig ausgeführt ist und bei dem der Zeigerantrieb 9 an dem Tragkörper 4 innenseitig angreift sind ebenso möglich.

Figur 2 zeigt eine Draufsicht auf das Zeigerinstrument 1 mit dem Zeiger 5 und dem daran angrenzenden Zifferblatt 7. Zu erkennen ist die an der Achse 3 zentral angeordnete und als LC-Display ausgeführte Anzeige 6. Um diese Achse 3 schwenkbar ist der kreisringförmige Tragkörper 4 mit einer die Zeigerstellung kennzeichnenden Markierung 10, die in der dargestellten Ruhestellung mit lediglich geringem Abstand gegen die Nullstellung des Zifferblattes 7 anliegt. Der unterhalb des Zifferblattes 7 angeordnete Zeigerantrieb 9 ist in einem freigeschnittenen Abschnitt des Zifferblattes 7 zu erkennen. Der Zeiger 5 ist von dem Zeigerantrieb 9 mittels des Riemenantriebes 8 auslenkbar, der eine Übertragung von äußeren Erschütterungen oder Vibrationen auf den Zeiger 5 verhindert.

Neben der dargestellten Anzeige 6 können an der Achse 3 auch weitere Bauteile, beispielsweise Warnleuchten, aber auch weitere Zeigerinstrumente, angeordnet sein. Eine andere Gestaltung des Zeigers, bei der das Zeigerinstrument eine mittels des Tragkörpers schwenkbare Skalierung und eine ortsfeste Markierung oder Zeigerfahne aufweist, sind ebenfalls möglich.

## Patentansprüche

1. zeigerinstrument (1), insbesondere für ein Kraftfahrzeug, mit einem Zeiger (5), einem Zeigerantrieb (9) zur Auslenkung des Zeigers (5) und mit einem Zifferblatt (7), wobei mit dem Zeiger (5) an dem Zifferblatt (7) Messwerte analog darstellbar sind, wobei der Zeiger (5) um eine ortsfeste Achse (3) schwenkbar ist, welche an einem einem Betrachter zugeneigten Abschnitt eine Anzeige (6) trägt, wobei der Zeiger (5) einen um die Achse (3) schwenkbaren, rotationssymmetrischen Tragkörper (4) aufweist, der an seiner einem Betrachter abgewandten Seite eine Lichteinkoppelfläche (11) aufweist.

2. Zeigerinstrtument nach Anspruch 1, **dadurch gekennzeichnet, dass** die Anzeige (6) eine Flüssigkristallanzeige (LCD) ist.

3. Zeigerinstrument nach einem der vorhergehenden Ansprüche, **dadurch gekennzeichnet, dass** die Achse (3) in einem für den Betrachter nicht sichtbaren Abschnitt einen geringeren Durchmesser aufweist als in einem für den Betrachter sichtbaren Abschnitt (Erweiterung 13).

4. Zeigerinstrument nach einem der vorhergehenden Ansprüche, **dadurch gekennzeichnet, dass** der Zeiger (5) und das Zifferblatt (7) in einer gemeinsamen Ebene angeordnet sind.

5. Zeigerinstrument nach einem der vorhergehenden Ansprüche, **dadurch gekennzeichnet, dass** das Zeigerinstrument (1) mittels einer Elektrolumineszenz-Folie (12) beleuchtbar ist.

6. Zeigerinstrument nach einem der vorhergehenden Ansprüche, **dadurch gekennzeichnet, dass** der Zeiger (5) von dem Zeigerantrieb (9) mittels eines Riemenantriebes (6) auslenkbar ist.

7. Zeigerinstrument nach einem der vorhergehenden Ansprüche, **dadurch gekennzeichnet, dass** der Zeigerantrieb (9) seitlich neben dem Zeiger (5) angeordnet ist.

## Claims

1. Pointer instrument (1), especially for a motor vehicle, having a pointer (5), a pointer drive (9) for deflecting the pointer (5) and having a dial (7), it being possible for measured values to be displayed in analogue fashion on the dial (7) using the pointer (5), the pointer (5) being able to pivot about a fixed axle (3) which, on a section inclined towards a viewer, bears a display (6), the pointer (5) having a rotationally symmetrical load-bearing body (4) which can pivot about the axle (3), load-bearing body (4) has a light-injection face (11) on its side facing away from a viewer.

2. Pointer instrument according to Claim 1, **characterized in that** the display (6) is a liquid crystal display (LCD).

3. Pointer instrument according to one of the preceding claims, **characterized in that** the axle (3) has a smaller diameter in a section that cannot be seen by the viewer than in a section (widening 13) which can be seen by the viewer.

4. Pointer instrument according to one of the preceding claims, **characterized in that** the pointer (5) and the dial (7) are arranged in a common plane.

5. Pointer instrument according to one of the preceding claims, **characterized in that** the pointer instrument (1) can be illuminated by means of an electroluminescent sheet (12).

6. Pointer instrument according to one of the preceding claims, **characterized in that** the pointer (5) can be deflected by the pointer drive (9) by means of a belt drive (8).

7. Pointer instrument according to one of the preceding claims, **characterized in that** the pointer drive (9) is arranged laterally alongside the pointer (5).

## Revendications

1. Instrument à aiguille (1) destiné, notamment, à un véhicule automobile, comportant une aiguille (5), un entraînement d'aiguille (9) destiné à faire dévier l'aiguille (5) et un cadran (7), sur lequel des valeurs de mesure peuvent être indiquées d'une façon analogique par l'aiguille (5) sur le cadran (7), l'aiguille (5) pouvant tourner autour d'un axe fixe (3) qui porte un affichage (6) sur une section tournée vers un observateur, où l'aiguille (5) comporte un berceau porteur (4) à symétrie de révolution, pouvant pivoter autour de l'axe (3) et comportant, sur son côté opposé à un observateur, une surface de couplage de lumière (11).

2. Instrument à aiguille selon la revendication 1 **caractérisé par le fait que** l'affichage (6) est un affichage à cristaux liquides (ou affichage LCD).

3. Instrument à aiguille selon l'une des revendications précédentes **caractérisé par le fait que** l'axe (3) a, dans une section non visible pour l'observateur, un diamètre plus faible que dans une section visible pour l'observateur (élargissement 13).

4. Instrument à aiguille selon l'une des revendications précédentes **caractérisé par le fait que** l'aiguille (5) et le cadran (7) sont disposés dans un même plan.

5. Instrument à aiguille selon l'une des revendications précédentes **caractérisé par le fait que** l'instrument à aiguille (1) peut être éclairé au moyen d'une membrane électroluminescente (12).

6. Instrument à aiguille selon l'une des revendications précédentes **caractérisé par le fait que** l'aiguille (5) peut dévier sous l'effet d'un entraînement d'aiguille (9) au moyen d'un entraînement à courroie (8).

7. Instrument à aiguille selon l'une des revendications précédentes **caractérisé par le fait que** l'entraînement d'aiguille (9) est disposé latéralement près de l'aiguille (5).
